# EUROPEAN PATENT SPECIFICATION

(11) **EP 3 431 335 B1**
(45) Date of publication and mention of the grant of the patent: **02.09.2020**
(21) Application number: 18184158.6
(22) Date of filing: 18.07.2018
(51) Int. Cl.: B60N 3/00, B64D 11/06

(54) **FOLDABLE TABLE ASSEMBLY FOR A PASSENGER VEHICLE**
KLAPPBARE TISCHBAUGRUPPE FÜR EIN FAHRZEUG
ENSEMBLE DE TABLE RABATTABLE POUR VEHICLE

(30) Priority: 18.07.2017 IT 201700081207
(43) Date of publication of application: 23.01.2019
(73) Proprietor: IVECO FRANCE S.A.S., 69200 Vénissieux (FR)
(72) Inventor: NOVOTNY, Radomil, 566 01 Vysoké Mýto (CZ)
(74) Representative: Fiume, Orazio

(56) References cited:
- WO-A1-97/26811
- US-A1- 2013 001 987

## Description

### CROSS-REFERENCE TO RELATED APPLICATIONS

*This application claims priority from Italian Patent Application No.* 102017000081207 filed on 18/07/2017*.*

### Field of the invention

The present invention relates to a foldable table assembly for a passenger vehicle, in particular for public transportation terrestrial vehicles and aircrafts.

### Description of the prior art

The passenger transportation vehicles are usually equipped with foldable table usually hinged/connected to the backrest of the preceding seat of a line of seats. Usually, such tables are suitable to assume
- a first configuration, i.e. folded, wherein the table adheres to the backrest of the preceding seat, so as to leave more clearance between two consecutive seats and, consequently, more freedom to move for the corresponding passenger and
- a second configuration, substantially horizontal, so as the passenger can exploit the table to support the newspaper or foods during a snack.

The large diffusion of tablets to read news or to work also during a journey impose to the customer to use foldable covers adapted to support the tablet in a suitable position, that usually falls between 30° and 60° with respect to the horizontal plane defined by the foldable table in said second configuration. An example of a foldable tablet is disclosed in US20130001987.

### Summary of the invention

The main object of the present invention to provide a foldable table hinged and shaped in order to be more comfortable and versatile.

The main principle of the invention is the following: a table substantially rectangular is hinged to a surface substantially vertical, for example of a rear face of a backrest of a preceding seat, so as to be foldable with respect to said surface from a first stable position in which a first face of the table adhere to said surface and a second stable position in which said first face is oriented upwards; the table is hinged to said surface through a couple of arms, wherein each arm has a first end hinged to a lateral edge of the table thereby defining a first rotation axis laying substantially parallel with said first face and a second end hinged to said surface thereby defining a second rotation axis laying substantially parallel with said surface; said table comprising a first edge and a second edge opposite to the first edge, both parallel with respect to said first rotation axis and said surface being provided with at least a lock means suitable to receive said first edge in said second position, so as to prevent the table from rotating over said first rotation axis; said first edge being provided also with at least one through hole and said surface being provided with at least a corresponding hook arranged over said lock means with said second rotation axis arranged between said first lock means and said hook, the hook being positioned so as the table can be suspended to said hook by rotating over said first and second axis and assuming a third stable position with a vertical position higher than in said second position.

Advantageously, according to the present invention, the table can assume at least three positions, folded, namely adherent to the surface to which is hinged, open, namely with its supporting face, the above first face, arranged upwards, and at least third condition with said the table inclined with respect to the surface, so as the first face can support a tablet or a book with a higher position that facilitates the reading of tablets and books.

According to a first preferred embodiment of the invention, the table is concave with said first face substantially flat and surrounded with a bent, preferably continuous, edge. Such shape prevents the objects resting on the table from sliding and falling down during movement of the vehicle.

According to a preferred embodiment of the invention, the second edge opposite to the first edge of the table defines on said first face a sort of straight pocket, parallel with said first rotation axis, to receive and maintain the edge of a tablet or book.

According to another preferred embodiment that can be combined with one or more of the previous ones, the first rotation axis in bounded between the main axis of the substantially rectangular shape of the table and said first edge. Preferably, if the table is divided into four quarters parallel to said main axis, said first rotation axis divides the first quarter from the second one.

According to a preferred embodiment of the invention, the table is provided with two through holes symmetrically arranged with respect to the minor axis of the rectangular shape and the surface has two corresponding hooks.

Preferably, said surface comprises a couple of lock means arranged symmetrically with respect to said minor axis of the rectangular shape of the table.

Preferably, the table, the arms, the hinges hinging the arms on the surface, the lock means and the hooks are, as whole, symmetrically disposed with respect to said minor axis.

An object of the invention is a foldable table assembly according to claim 1.

Another object of the invention is a seat comprising a backrest (BR) having a rear surface (SF) substantially vertical, with the seat comprising the above table assembly. A further object of the invention is a public transportation vehicle, such as a bus or an aircraft or a vessel, comprising the above seat.

These and further objects are achieved by means of the attached claims.

### Brief description of the drawings

The invention will become fully clear from the following detailed description, given by way of a mere exemplifying and non limiting example, to be read with reference to the attached drawing figures, wherein:
Figs. 1, 3 and 5 shows rear perspective view of a seat where a foldable table according to the present invention is disclosed according to three different stable conditions, and figure 5a discloses a portion of figure 5 according to a lateral view;
Figs. 2, 4 and 6 disclose a zoom respectively of said figures 1, 3 and 5.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

The foldable table assembly according to the present invention comprises a table T, a surface SF substantially vertical, or slightly inclined backwards, that can coincide with the rear surface of a backrest of a vehicle seat and connecting means A, AS, T; A, AS, T, LM; A, AS, T, HW, HK connecting the table to said surface SF.

Usually, mass transportation vehicles comprise a plurality of seats aligned according to a longitudinal development of the vehicle, thus the surface SF of the backrest of the vehicle seat is oriented backwards.

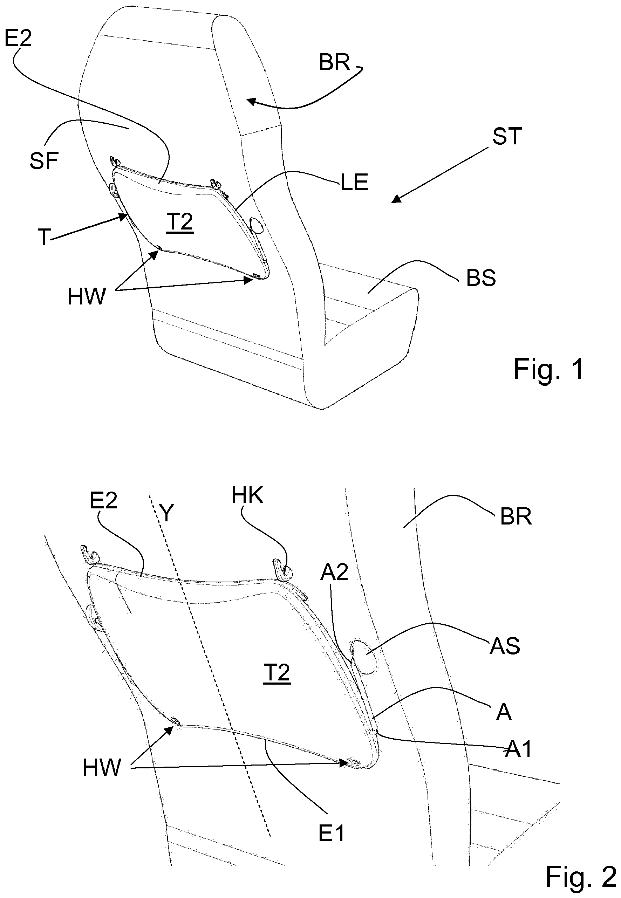

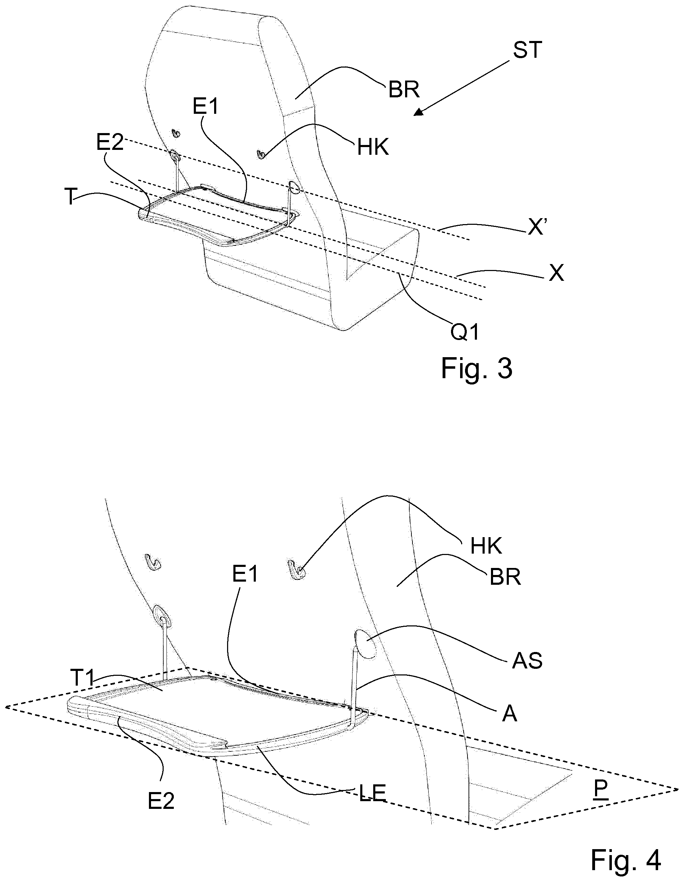

The connecting means are such that the table can assume
- a first stable folded position in which a first face T1 of the table adheres to said surface, see figure 1 and 2;
- a second stable position in which the plane P individuated by said table T is incident and substantially perpendicular, with said surface and said first face T1 is oriented upwards at a first vertical position Q1, see figure 3 and 4;
- a third stable position in which the plane P individuated by the table is incident and inclined with respect to said surface at a second vertical position Q2 equal or preferably higher than said first vertical position. In particular, the first face is incline rearward facing the head of the passenger accommodated in a next rear seat.

The second face T2, opposite to the first face T1 faces substantially the surface SF, and the plane P individuated by the table forms an acute angle α with the surface SF which is oriented downwards.

It is well known that an orientation of an angle is evaluated by means of its bisector vector BS. Therefore, the bisector vector BS of the angle α between the plane P and the surface SF is oriented downwards.

Upwards and downwards are referred to the soil.

According to the invention, in both second and third operative stable positions, the same first face T1 of the table are operative.

This means that if the first face T1 is provided with retention means for the passenger belongings, such retention means are available in both second and third operating condition. Otherwise, a first set and a second set of retention means should be implemented on the opposite faces of the table as disclosed in US20130001987.

The table has a flat substantially rectangular shape and is hinged to said surface SF through a couple of arms A, wherein each arm has a first end A1 hinged to a lateral edge LE of the table thereby defining a first rotation axis X laying substantially parallel with said first face T1 and a second end T2 hinged to said surface SF of the backrest, thereby defining a second rotation axis X' laying substantially parallel with said surface SF.

The backrest can be provided with elements AS protruding from the surface SF to define the seats of the second end A2 of the arms A. Indeed the arms A have preferably an elongated S-shape.

The table comprises a first edge E1 and a second edge E2 opposite to the first edge, both parallel with respect to said first rotation axis X, while the surface SF has at least a lock means LM suitable to receive said first edge in said second position, so as to prevent the table from rotating over said first and second rotation axis.

Also the lock means LM can protrude from the surface, however it defines an elongate throat or grove complimentary with the thickness of the first edge E1, thus such throat/groove can be made directly in the backrest surface. The table has, close to the first edge, at least one through hole HW communicating the first face T1 with its opposite face T2. The surface SF is provided with at least a corresponding hook HK arranged at a vertical position higher than said lock means LM with said second rotation axis X' arranged between said first lock means and said hook. In particular, the hook is positioned so as the table can be suspended to said hook by rotating over said first and second axis and assuming said third stable position. Preferably, the table is concave with said first face T1 substantially flat and surrounded with a bent, preferably continuous, edge. In addition, the second edge E2 opposite to the first edge E1 of the table defines on said first face T1 a sort of straight pocket, parallel with said first rotation axis X, to receive and maintain the edge of a tablet.

Preferably, the first rotation axis X in bounded between the main symmetry axis of the substantially rectangular shape of the table and said first edge E1. More preferably, the table is virtually divided into four quarters parallel to said main symmetry axis of said substantially rectangular shape and wherein said first rotation axis divides the first quarter from the second one.

Preferably, the table, the arms A, the hinges AS hinging the arms on the surface SF, the lock means LM and the hooks HK are, as whole, symmetrically disposed with respect to said minor axis Y disclosed in figure 2.

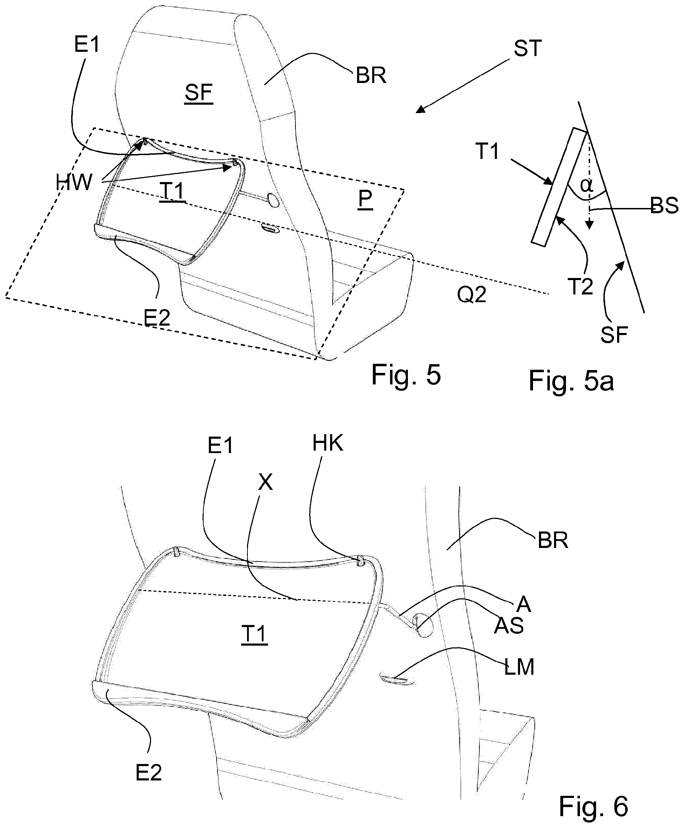

By the comparison of the vertical position Q1 on figure 3 and Q2 on figure 5, it is clear that Q2 is equal or higher than Q1.

Figure 5a shows a lateral view of a backrest of a seat of the invention, where the angle α formed between the table and the rear surface RS of the back rest is oriented downwards.

The vertical positions are traced considering the main axis of the rectangular table, namely where falls the center of the rectangle.

The seat, according to the present invention, has a base seat BS and a backrest rigidly connected to the base seat. Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

It should be understood that all the single features and/or embodiments can be combined between each other. In addition, the features disclosed in the prior art background are introduced only in order to better understand the invention and not as a declaration about the existence of known prior art. Therefore, also the features described in the prior art background can be considered in combination with those mentioned in each embodiment of the detailed description.

Further implementation details will not be described, as the man skilled in the art is able to carry out the invention starting from the teaching of the above description.

## Claims

1. Foldable table assembly for a passenger vehicle comprising
- a table (T) identifying a plane (P) and a first face (T1) and a second face (T2) opposite to said first face,
- a surface (SF) substantially vertical or slightly inclined and
- connecting means (A, AS, T; A, AS, T, LM; A, AS, T, HW, HK) connecting said table to said surface;
wherein said connecting means are such that the table can assume a first stable folded position in which said first face (T1) of the table adheres to said surface (SF), a second stable position in which said first face (T1) is oriented upwards at a first vertical position (Q1) and said plane (P) is substantially perpendicular to said surface (SF), and a third stable position in which the table is at a second vertical position (Q2) equal or higher than said first vertical position and said plane is incident and inclined with respect to said surface (SF) with said second face (T2) facing said surface (SF) such that an acute angle (α) formed between said plane and said surface is oriented downwards;
wherein said foldable table assembly has:
- a flat substantially rectangular shape, and the table is hinged to said surface (SF) through a couple of arms (A), wherein each arm has a first end (A1) hinged to a lateral edge (LE) of the table thereby defining a first rotation axis (X) laying substantially parallel with said first face (T1) and a second end (A2) hinged to said surface thereby defining a second rotation axis (X') laying substantially parallel with said surface (SF);
- a first edge (E1) and a second edge (E2) opposite to the first edge, both parallel with respect to said first rotation axis (X) and wherein said surface (SF) is provided with at least a lock means (LM) suitable to receive said first edge in said second position, so as to prevent the table from rotating over said first rotation axis, and
said foldable table assembly being **characterized in that** the table (T) is provided with at least one through hole (HW), close to said first edge (E1) communicating said first face (T1) with said second face (T2), and wherein said surface (SF) is provided with at least a corresponding hook (HK) arranged over said lock means (LM) with said second rotation axis (X') arranged between said first lock means and said hook, the hook being positioned so as the table can be suspended to said hook by rotating over said first and second axis and assuming said third stable position.

2. Assembly according to claim 1, wherein the table is concave with said first face (T1) substantially flat and surrounded with a bent, preferably continuous, edge.

3. Assembly according to claim 2, wherein said second edge (E2) opposite to the first edge (E1) of the table defines on said first face (T1) a straight pocket, parallel with said first rotation axis (X), to accommodate an edge of a tablet or of a book.

4. Assembly according to claims 2 or 3, wherein said first rotation axis (X) in bounded between the main symmetry axis of the substantially rectangular shape of the table and said first edge (E1) .

5. Assembly according to claim 4, wherein the table is virtually divided into four quarters parallel to said main symmetry axis of said substantially rectangular shape and wherein said first rotation axis divides the first quarter from the second one.

6. Seat (ST) comprising a backrest (BR) having a rear surface, the seat comprising the table assembly according to any of previous claims 1 - 5 connected to said surface, wherein said rear surface defines said surface (SF) substantially vertical or slightly inclined.

7. Public transportation vehicle, such as a bus or an aircraft or a vessel, comprising the seat (ST) according to claim 6.

## Patentansprüche

1. Klappbare Tischbaugruppe für ein Personenfahrzeug, umfassend
- einen Tisch (T), der eine Ebene (P) und eine erste Seite (T1) und eine zweite Seite (T2) gegenüberliegend der ersten Seite definiert,
- eine Oberfläche (SF), die im Wesentlichen vertikal oder leicht geneigt ist und
- Verbindungsmittel (A, AS, T; A, AS, T, LM; A, AS, T, HW, HK), die den Tisch mit der Oberfläche verbinden;
wobei die Verbindungsmittel so ausgeführt sind, dass der Tisch eine erste stabile eingeklappte Position einnehmen kann, in der die erste Seite (T1) des Tischs an der Oberfläche (SF) anliegt, eine zweite stabile Position einnehmen kann, in der die erste Seite (T1) in einer ersten vertikalen Position (Q1) nach oben gerichtet ist und die Ebene (P) im Wesentlichen senkrecht zur Oberfläche (SF) steht, und eine dritte stabile Position einnehmen kann, in welcher der Tisch in einer zweiten vertikalen Position (Q2) ist, die gleich oder höher als die erste vertikale Position ist und in der die Ebene in Bezug auf die Oberfläche (SF) aufgestellt und geneigt ist, wobei die zweite Seite (T2) so zur Oberfläche (SF) gerichtet ist, dass ein zwischen der Ebene und der Oberfläche gebildeter spitzer Winkel (α) nach unten gerichtet ist;
wobei die klappbare Tischbaugruppe:
- eine flache, im Wesentlichen rechteckige Form hat, und der Tisch durch zwei Arme (A) an die Oberfläche (SF) angelenkt ist, wobei jeder Arm ein erstes Ende (A1) aufweist, das an einen seitlichen Rand (LE) des Tischs angelenkt ist und dadurch eine erste Drehachse (X) definiert, die im Wesentlichen parallel zur ersten Seite (T1) verläuft, und ein zweites Ende (A2) aufweist, das an die Oberfläche angelenkt ist und dadurch eine zweite Drehachse (X') definiert, die im Wesentlichen parallel zur Oberfläche (SF) verläuft;
- einen ersten Rand (E1) und einen zweiten Rand (E2) gegenüber dem ersten Rand hat, wobei beide parallel in Bezug auf die erste Drehachse (X) sind und
wobei die Oberfläche (SF) mit mindestens einem Verriegelungsmittel (SM) versehen ist, das geeignet ist, den ersten Rand in der zweiten Position aufzunehmen, um eine Rotation des Tischs um die erste Rotationsachse zu verhindern, und
wobei die klappbare Tischbaugruppe **dadurch gekennzeichnet ist, dass** der Tisch (T) mit mindestens einem Durchgangsloch (HW) nahe am ersten Rand (E1) ausgeführt ist, durch das die erste Seite (T1) mit der zweiten Seite (T2) in Verbindung steht, und wobei die Oberfläche (SF) mit mindestens einem entsprechenden Haken (HK) versehen ist, der oberhalb der Verriegelungsmittel (LM) angeordnet ist, wobei die zweite Rotationsachse (X') zwischen den ersten Verriegelungsmitteln und dem Haken angeordnet ist, wobei der Haken so positioniert ist, dass der Tisch durch Drehung über die erste und die zweite Achse am Haken aufgehängt werden kann und die dritte stabile Position einnimmt.

2. Baugruppe nach Anspruch 1, wobei der Tisch konkav ist, wobei die erste Seite (T1) im Wesentlichen flach ist und von einem gebogenen, vorzugsweise durchgängigen Rand umgeben ist.

3. Baugruppe nach Anspruch 2, wobei der zweite Rand (E2) gegenüber dem ersten Rand (E1) des Tischs auf der ersten Seite (T1) eine gerade Tasche bildet, die parallel mit der ersten Drehachse (X) ist, um den Rand eines Tabletcomputers oder eines Buchs aufzunehmen.

4. Baugruppe nach einem der Ansprüche 2 oder 3, wobei die erste Drehachse (X) von der Hauptsymmetrieachse der im Wesentlichen rechteckigen Form des Tischs und dem ersten Rand (E1) eingegrenzt ist.

5. Baugruppe nach Anspruch 4, wobei der Tisch parallel zu der Hauptsymmetrieachse der im Wesentlichen rechteckigen Form virtuell in vier Viertel unterteilt ist und wobei die erste Drehachse das erste Viertel vom zweiten Viertel trennt.

6. Sitz (ST), umfassend eine Rückenlehne (BR) mit einer hinteren Oberfläche, wobei der Sitz die Tischbaugruppe nach einem der vorstehenden Ansprüche 1 bis 5 umfasst, die mit der Oberfläche verbunden ist, wobei die hintere Oberfläche die Oberfläche (SF) definiert, die im Wesentlichen vertikal oder leicht geneigt ist.

7. Öffentliches Verkehrsmittel, zum Beispiel ein Bus, ein Luftfahrzeug oder ein Wasserfahrzeug, umfassend den Sitz (ST) nach Anspruch 6.

## Revendications

1. Ensemble table rabattable pour un véhicule de passagers comprenant :
- une table (T) identifiant un plan (P) et une première face (T1) et une seconde face (T2) opposée à ladite première face,
- une surface (SF) sensiblement verticale ou légèrement inclinée et
- des moyens de liaison (A, AS, T ; A, AS, T, LM ; A, AS, T, HW, HK) reliant ladite table à ladite surface ;
dans lequel lesdites moyens de liaison sont tels que la table peut adopter une première position pliée stable dans laquelle ladite première face (T1) de la table adhère à ladite surface (SF), une deuxième position stable dans laquelle ladite première face (T1) est orientée vers le haut dans une première position verticale (Q1) et ledit plan (P) est sensiblement perpendiculaire à ladite surface (SF), et une troisième position stable dans laquelle la table est dans une deuxième position verticale (Q2) égale ou plus élevée que ladite première position verticale et ledit plan est incident et incliné par rapport à ladite surface (SF) avec ladite seconde face (T2) faisant face à ladite surface (SF) de telle sorte qu'un angle aigu (α) formé entre ledit plan et ladite surface est orienté vers le bas ;
dans lequel ledit ensemble table rabattable présente :
- une forme plate sensiblement rectangulaire, et la table s'articule sur ladite surface (SF) par le biais d'un couple de bras (A), dans lequel chaque bras présente une première extrémité (A1) s'articulant sur un bord latéral (LE) de la table définissant de ce fait un premier axe de rotation (X) se trouvant sensiblement parallèle à ladite première face (T1) et une seconde extrémité (A2) s'articulant sur ladite surface définissant de ce fait un second axe de rotation (X') se trouvant sensiblement parallèle à ladite surface (SF) ;
- un premier bord (E1) et un second bord (E2) opposé au premier bord, tous deux parallèles par rapport audit premier axe de rotation (X) et dans lequel ladite surface (SF) est pourvue d'au moins un moyen de verrouillage (LM) approprié pour recevoir ledit premier bord dans ladite deuxième position, de manière à empêcher la table de tourner sur ledit premier axe de rotation, et
ledit ensemble table rabattable étant **caractérisé en ce que** la table (T) est pourvue d'au moins un trou traversant (HW), près dudit premier bord (E1) faisant communiquer ladite première face (T1) avec ladite seconde face (T2), et dans lequel ladite surface (SF) est pourvue d'au moins un crochet (HK) correspondant agencé par-dessus ledit moyen de verrouillage (LM) avec ledit second axe de rotation (X') agencé entre ledit premier moyen de verrouillage et ledit crochet, le crochet étant positionné de manière à ce que la table puisse être suspendue audit crochet en tournant sur lesdits premier et second axes et adoptant ladite troisième position stable.

2. Ensemble selon la revendication 1, dans lequel la table est concave avec ladite première face (T1) sensiblement plate et entourée d'un bord courbé, de préférence continu.

3. Ensemble selon la revendication 2, dans lequel ledit second bord (E2) opposé au premier bord (E1) de la table définit sur ladite première face (T1) une poche droite, parallèle audit premier axe de rotation (X), pour accueillir un bord d'une tablette ou d'un livre.

4. Ensemble selon la revendication 2 ou 3, dans lequel ledit premier axe de rotation (X) est délimité entre l'axe de symétrie principal de la forme sensiblement rectangulaire de la table et ledit premier bord (E1).

5. Ensemble selon la revendication 4, dans lequel la table est virtuellement divisée en quatre quarts parallèles audit axe de symétrie principal de ladite forme sensiblement rectangulaire et dans lequel ledit premier axe de rotation divise le premier quart du deuxième.

6. Siège (ST) comprenant un dossier (BR) comportant une surface arrière, le siège comprenant l'ensemble table selon l'une quelconque des revendications précédentes 1 à 5 relié à ladite surface, dans lequel ladite surface arrière définit ladite surface (SF) sensiblement verticale ou légèrement inclinée.

7. Véhicule de transport public, tel qu'un bus ou un aéronef ou un navire, comprenant le siège (ST) selon la revendication 6.
